# EUROPEAN PATENT SPECIFICATION

(11) **EP 0 586 027 B1**
(45) Date of publication and mention of the grant of the patent: **05.02.1997**
(21) Application number: 93250213.1
(22) Date of filing: 20.07.1993
(51) Int. Cl.: B65D 51/16

(54) **Manual relief gas vent**
Handbetätigte Entgasungsvorrichtung
Dispositif de ventilation de gaz actionné manuellement

(30) Priority: 07.08.1992 US 926990
(43) Date of publication of application: 09.03.1994
(73) Proprietor: W.R. Grace & Co.-Conn., New York, New York 10036 (US)
(72) Inventor: Bryant, Billy W., Hixson, Tennessee 37345 (US); McCarthy, Robert Edward, Fallston, Maryland 21047 (US)
(74) Representative: UEXKÜLL & STOLBERG

(56) References cited:
- FR-A- 827 828
- GB-A- 745 745
- US-A- 3 437 254
- US-A- 4 688 591

## Description

### BACKGROUND OF THE INVENTION

### 1. Field of the Invention

This invention relates to a manual relief gas vent which can be placed in a drum lid to control the pressure in the drum.

### 2. Description of the Prior Art

Various chemical materials have been stored in sealed drums. Some of these materials will produce a gas. After a period of time a gas pressure will build up and a problem develops as to how to safely vent the gas, especially when it is an explosive gas such as hydrogen. For example, when Raney nickel is stored in a sealed drum, there is a tendency for hydrogen gas to be generated which should be vented. When the drum is opened for use, it is necessary to carefully open the drum band and slowly pry up the lid to relieve any gas pressure which may exist inside.

One solution to the problem is to use an automatic relief valve which is spring loaded. It could be set to vent the drum whenever the pressure was above a certain level such as 20.7 kPa (3 psig). There is an environmental control problem, however, with these valves because there is no way to control the gas coming off. If there are many drums in an unvented storage room on a hot day, the drums will all generate volumes of gas which the valves will automatically vent to the room. There will be no way to prevent the gas from accumulating in the room.

Gas vents have been placed in drums in the past, but these vents extend vertically to some extent such that they extend above the rim of the drum when they are inserted into the bung hole of the drum lid. When the valves extend above the drums, it is not possible to stack the drums one on top of the other.

In U.S. Patent No. 4,688,591, a relief valve is used inside a cylindrical reducer housing. While effective, this device requires fabricating a cylindrical reducer housing for insertion in the bung hole. The fabrication of such a housing requires many manufacturing steps which add to the expense and the time involved to make the completed lid. Also, because the reducer housing is inserted in the lid cover through a two inch threaded opening, this threaded interface provides an additional region to seal to prevent possible leaking.

GB-A-745 745 discloses the positioning of a pneumatic valve in a drum lid wherein the valve outlet is at the topmost portion of the valve (Figure 2) well above any depression created in the primary lid wall. This reference does not disclose or suggest a construction where the valve outlet opens to a reservoir (depression) formed directly in the primary lid wall. Further, it does not contemplate any functionality associated with venting of gas into a reservoir.

FR-A-827 828 merely discloses the attachment of a specific valve design into a drum lid.

### 3. Objects of the Invention

It is an object of this invention to have a valve assembly for a drum which is compact and which fits in a depression in the drum lid so that it does not extend above the height of the drum rim.

It is a further object of this invention to have a manually operated gas relief valve which can be safely operated to vent even explosive gases from a sealed drum, while providing a positive seal when such venting is prohibited.

It is a further object of this invention to provide a sealed drum with a simplified cover and with better cover integrity.

It is a further object of this invention to have a less expensive ventable drum cover by using a less costly reducer valve which can be simply made and quickly inserted into a drum cover.

It is a further object of this invention to have a valve assembly for a drum where the valve outlet is protectively positioned in a reservoir within the drum lid.

It is a further object of this invention to have a valve assembly where the valve outlet discharges into a reservoir which can be filled with water or other inert fluid to visually detect the flow of gas from the outlet as the gas bubbles into the reservoir.

These and further objects will become apparent as the description of the invention proceeds.

### SUMMARY OF THE INVENTION

This invention relates to a drum lid including a manually ventable valve assembly, as claimed in claim 1.

A protective cap can be placed over the drum valve assembly to keep out foreign matter and freezing liquids and the valve is preferably made of a spark resistant material. During the venting operation, the reservoir can be filled with an inert fluid such as water. When the valve stem is slowly opened, the operator can visually confirm that a gas such as hydrogen is venting out by watching the bubbles of vented gas rising up to the liquid surface. After the gas has vented out, the lid can be removed from the drum.

### BRIEF DESCRIPTION OF THE DRAWINGS

Fig. 1 illustrates a top view of the drum lid.

Fig. 2 illustrates a cross-sectional view of a portion of the lid showing the reservoir without the valve inserted.

Fig. 3 illustrates a cross-sectional view of the lid and the drum valve assembly.

### DESCRIPTION OF THE PREFERRED EMBODIMENTS

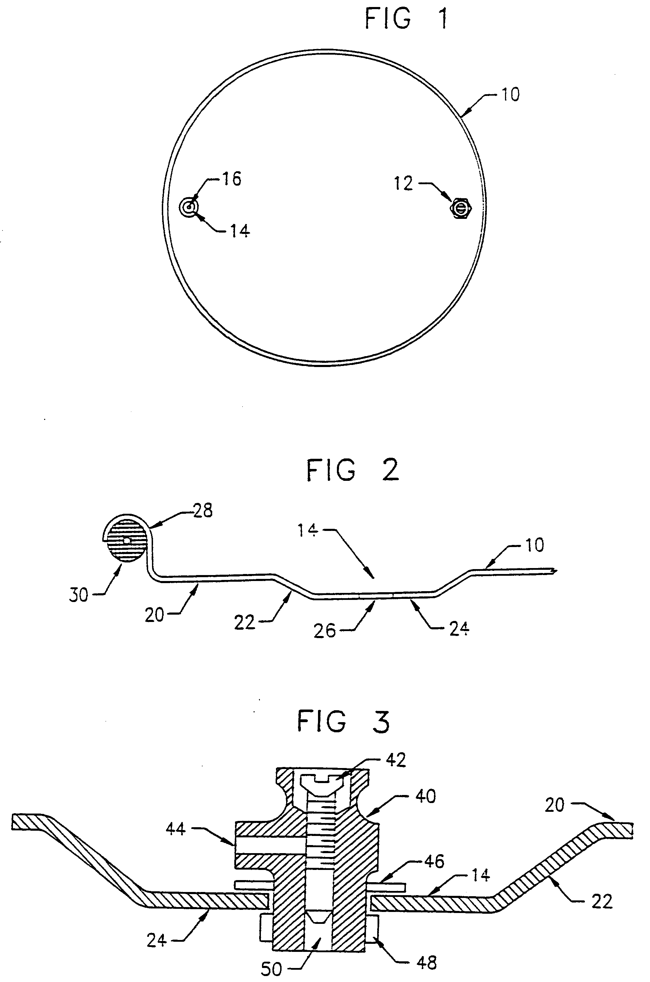

A preferred embodiment is illustrated in the figures. The drum lid 10 shown in Fig. 1 has a bung opening with a cap 12 and a reservoir 14 in the drum lid into which is inserted the relief valve 16.

Fig. 2 provides a side view of the lid 10 showing the depression 14 formed by side walls 22 and the bottom surface 24. Opening 26 in the bottom of the reservoir is where the valve will be mounted. The lid had a lip 28 with a gasket 30 inside the curl of the lip.

The valve housing 40 is illustrated in Fig. 3 and is preferably a standard, commercially available valve assembly which is inserted into the central opening 26. It is secured to the lid by a fastening nut 48 on the underside. A washer seal 46 is placed between the housing and the lid to prevent leakage. Preferably a further gas tight sealant is applied between the threads of the fastening nut and the threads on the bottom of the valve assembly and more preferably a liquid thread sealant is used. The upper portion of the valve housing 40 has the valve stem 42 therein and a valve opening 44 which opens into the reservoir 14. The valve housing is preferably made of a spark resistant material with nickel plated brass being particularly preferred. Other valve housings could be used without outside threads provided that sufficient engagement means are provided to secure the valve housing in the central opening.

An optional weather cap 60 (not shown) made out of a plastic or rubber material can be inserted over the reservoir to protect the valve stem and the valve outlet in the reservoir from freezing liquid or foreign matter. The cap can fit over the top of the housing.

To assemble the lid, the valve assembly is inserted into the opening in reservoir of the drum lid. A seal is provided between the valve assembly and the opening in the lid. The seal can be in the form of a washer which can be placed on either side of the lid. In Fig. 3 it is placed on the upper side. Preferably the washer is a metal washer since this has been found to provide the best seal. A fastening nut is threaded on to the bottom of the valve stem assembly and the nut is tightened to provide a secure seal. In a preferred embodiment a gas tight seal along the threads can be made by applying a sealant. Preferably a liquid thread sealant can be used such as Loctite® RE/620, a retaining compound made by Loctite Corp. or its equivalent

When it is desired to check or vent the drum, the reservoir 14 may be filled with water or some other inert fluid. Should there be gas under pressure in the drum, then when the valve stem is slightly opened the small venting of the gas will be very readily seen by the bubbles of gas coming up through the water or other inert fluid. The operator can continue to either vent the gas or else close the valve stem to maintain the gas under pressure in the drum.

When it is desired to slowly vent the drum, the operator can open the stem valve and determine how much gas is coming out by observing how many bubbles are flowing up through the reservoir.

A further feature of the system is that it provides a positive indication that the drum is in a neutral condition. If there is water in the reservoir and the valve stem is completely removed, then if the water flows down into the drum the operator knows that there is no gas pressure in the drum and that the valve opening into the drum is not plugged. With this assurance that the drum is in a neutral condition, the operator can then proceed to safely open the drum lid.

The valve assembly with the liquid thread sealant has been successfully tested on a drum. It met the Department of Transportation's 6B Drum Specification (Section 178.98) for impact testing and pressure testing. Because the valve stem is recessed in the depression in the lid and is lower than the outer drum ring, it will not be harmed when the drum tips over or when another drum is placed on top of the first drum.

The arrangement of the components of the drum valve assembly permit a variety of tools to access the parts so that the unit can be easily assembled.

It is understood that the foregoing detailed description is given merely by way of illustration and that many variations may be made therein.

## Claims

1. A drum lid including a manually ventable valve assembly comprising
a lid (10) adapted for attachment to the drum, the lid (10) having a primary lid wall portion (20);
a depression formed into said primary lid wall portion (20), said depression forming a reservoir (14) defined by an inclined peripheral side wall (22) and a bottom surface (24); and
a manually ventable valve assembly mounted to said bottom surface (24) and extending through an opening in said bottom surface (24),
said valve assembly having:
a valve stem housing (40) extending through the lid (10) and having a valve outlet (44) on the upper portion of said valve stem housing (40), said outlet (44) opening into the reservoir (44);
a fastening means (48) to secure the valve stem housing (40) to the lid (10);
a seal means (46) positioned around the valve stem housing (40) to provide a liquid-tight seal between the valve stem housing (40) and the lid (10), and
a manuable displaceable valve stem (42) in the valve stem housing (40) to control the flow of fluid through the valve stem housing (40) and out of the valve outlet (44) into the reservoir (14).

2. A drum lid (10) according to claim 1, wherein the seal means (46) is a washer.

3. A drum lid (10) according to claim 2, wherein the washer is a metal washer.

4. A drum lid (10) according to claim 1, further comprising a bung opening (12) in the drum lid.

5. The drum lid (10) according to claim 1, wherein the seal means (46) is a washer positioned on the top of said bottom surface (24).

6. The drum lid (10) according to claim 1, wherein the seal means (46) is a washer positioned on the lower side of said bottom surface (24).

7. The drum lid (10) according to claim 1, wherein the fastening means (48) is positioned on the lower side of said bottom surface (24) to engage the extended portion of said valve stem housing (40).

8. The drum lid (10) according to claim 7, wherein the fastening means (48) is a nut.

9. A method of manually venting a drum comprising
sealing the drum with a drum lid (10) according to claim 1,
filling the reservoir (14) with an inert liquid, and
opening the valve stem (42) to let gas escape as bubbles through said liquid.

## Patentansprüche

1. Faßdeckel mit einer manuell entlüftbaren Ventilanordnung mit
einem Deckel (10) zur Befestigung an dem Faß, wobei der Deckel (10) einen ersten Deckelwandabschnitt (20) hat;
einer Vertiefung in dem ersten Deckelwandabschnitt (20), wobei die Vertiefung ein Reservoir (14) bildet, das durch eine geneigte Umfangsseitenwand (22) und eine Bodenfläche (24) gebildet ist; und mit
einer manuell entlüftbaren Ventilanordnung, die an der Bodenfläche (24) angebracht ist und sich durch eine Öffnung in der Bodenfläche (24) erstreckt;
wobei die Ventilanordnung aufweist:
ein Ventilschaftgehäuse (40), das sich durch den Deckel (10) erstreckt und einen Ventilauslaß (44) an dem oberen Abschnitt des Ventilschaftgehäuses (40) hat, wobei der Ventilauslaß (44) in das Reservoir (44) mündet;
ein Befestigungsmittel (48) zur Befestigung des Ventilschaftgehäuses (40) an dem Deckel (10);
ein Dichtungsmittel (46), das um das Ventilschaftgehäuse (40) herum angeordnet ist, um eine flüssigkeitsfeste Dichtung zwischen dem Ventilschaftgehäuse (40) und dem Deckel (10) zu schaffen; und
einen manuell verschiebbaren Ventilschaft (42) in dem Ventilschaftgehäuse (40) zur Steuerung des Fluidstroms durch das Ventilschaftgehäuse (40) hindurch und aus dem Ventilauslaß (44) heraus in das Reservoir (14).

2. Faßdeckel (10) nach Anspruch 1, wobei das Dichtungsmittel (46) ein Dichtungsring ist.

3. Faßdeckel (10) nach Anspruch 2, wobei der Dichtungsring ein Metalldichtungsring ist.

4. Faßdeckel (10) nach Anspruch 1, ferner mit einer Spundöffnung (12) in dem Faßdeckel.

5. Faßdeckel (10) nach Anspruch 1, wobei das Dichtungsmittel (46) ein Dichtungsring ist, der an der Oberseite der Bodenfläche (24) angeordnet ist.

6. Faßdeckel (10) nach Anspruch 1, wobei das Dichtungsmittel (46) ein Dichtungsring ist, der an der Unterseite der Bodenfläche (24) angeordnet ist.

7. Faßdeckel (10) nach Anspruch 1, wobei das Befestigungsmittel (48) auf der Unterseite der Bodenfläche (24) zum Eingriff in den hervorstehenden Abschnitt des Ventilschaftgehäuses (40) angeordnet ist.

8. Faßdeckel (10) nach Anspruch 7, wobei das Befestigungsmittel (48) eine Mutter ist.

9. Verfahren zum manuellen Entlüften eines Fasses, das mit einem Faßdeckel (10) nach Anspruch 1 abgedichtet ist, durch Füllen des Reservoirs (14) mit einer inerten Flüssigkeit und Öffnen des Ventilschafts (42), um Gas als Bläschen durch die Flüssigkeit entweichen zu lassen.

## Revendications

1. Couvercle de fût comportant un ensemble formant soupape d'échappement actionnabie manuellement, comprenant :
un couvercle (10) apte à être fixé sur le fût, le couvercle (10) possédant une partie primitive (20) formant paroi de couvercle;
une dépression formée dans ladite partie primitive formant paroi de couvercle (20), ladite dépression formant un réservoir (14) défini par une paroi latérale périphérique inclinée (22) et une surface de fond (24); et
un ensemble formant soupape d'échappement à actionnement manuel, monté sur ladite surface de fond (24) et s'étendant au travers d'un orifice dans ladite surface de fond (24);
ledit ensemble formant soupape possédant :
un boîtier (40) avec tige de soupape s'étendant à travers le couvercle (10) et possédant une sortie de soupape (44) sur la partie supérieure dudit boîtier de soupape (40), ladite sortie (44) débouchant dans le réservoir (44);
un moyen de fixation (48) pour fixer le boîtier de soupape (40) sur le couvercle (10);
un moyen d'étanchéité (46) positionné autour du boîtier de soupape avec tige (40) pour fournir une bonne étanchéité aux liquides entre le boîtier de soupape (40) et le couvercle (10), et
une tige de soupape (42) déplaçable manuellement dans le boîtier de soupape (40) pour contrôler l'écoulement de fluide à travers le boîtier de soupape (40) et à l'extérieur de la sortie de soupape (44) dans le réservoir (14).

2. Couvercle de fût (10) selon la revendication 1, caractérisé en ce que le moyen d'étanchéité (46) est une rondelle.

3. Couvercle de fût (10) selon la revendication 2, caractérisé en ce que la rondelle est une rondelle métallique.

4. Couvercle de fût (10) selon la revendication 1, comprenant en outre un orifice formant bonde (12) dans le couvercle de fût.

5. Couvercle de fût (10) selon la revendication 1, caractérisé en ce que le moyen d'étanchéité (46) est une rondelle positionnée sur le sommet de ladite surface de fond (24).

6. Couvercle de fût (10) selon la revendication 1, caractérisé en ce que le moyen d'étanchéité (46) est une rondelle positionnée sur le côté inférieur de ladite surface de fond (24).

7. Couvercle de fût (10) selon la revendication 1, caractérisé en ce que le moyen de fixation (48) est positionné sur le côté inférieur de ladite surface de fond (24) pour s'engager sur la partie prolongée dudit boîtier de soupape avec tige (40).

8. Couvercle de fût (10) selon la revendication 7, caractérisé en ce que le moyen de fixation (48) est un écrou.

9. Procédé de ventilation manuelle d'un fût consistant à rendre étanche le fût avec un couvercle de fût (10) selon la revendication 1, à remplir le réservoir (14) avec un liquide inerte, et à ouvrir la tige de soupape (42) pour laisser le gaz s'échapper sous la forme de bulles au travers dudit liquide.
